Europäisches Patentamt

European Patent Office

Office européen des brevets

(19)

(11) EP 0 712 070 B1

# (12) FASCICULE DE BREVET EUROPEEN

(45) Date de publication et mention
de la délivrance du brevet:
**04.02.1998 Bulletin 1998/06**

(51) Int Cl.⁶: **G06F 7/72**

(21) Numéro de dépôt: **95470037.3**

(22) Date de dépôt: **26.10.1995**

(54) **Procédé de production d'un paramètre de correction d'erreur associé à la mise en oeuvre d'opérations modulaires selon la méthode de Montgomery**

Verfahren zum Erzeugen eines Fehlerkorrekturparameters in Verbindung mit der Verwendung von modularen Operationen nach der Montgomery-Methode

Production process of an error correcting parameter associated with the implementation of modular operations according to the Montgomery method

(84) Etats contractants désignés:
**DE FR GB IT**

(30) Priorité: **08.11.1994 FR 9413593**

(43) Date de publication de la demande:
**15.05.1996 Bulletin 1996/20**

(73) Titulaire: **SGS-THOMSON MICROELECTRONICS S.A.**
**94250 Gentilly (FR)**

(72) Inventeur: **Monier, Guy**
**F-57000 Metz (FR)**

(74) Mandataire: **Schmit, Christian Norbert Marie Cabinet Ballot-Schmit,**
**18 Place du Forum**
**57000 Metz (FR)**

(56) Documents cités:
**EP-A- 0 566 498**         **EP-A- 0 601 907**

- **ALGEBRAIC CODING. FIRST FRENCH-ISRAELI WORKSHOP PROCEEDINGS, FIRST FRENCH-ISRAELI WORKSHOP. ALGEBRAIC CODING, PARIS, FRANCE, 19-21 JULY 1993, ISBN 3-540-57843-9, 1994, BERLIN, GERMANY, SPRINGER-VERLAG, GERMANY, pages 75-81, NACCACHE D ET AL 'Montgomery-suitable cryptosystems'**
- **ADVANCES IN CRYPTOLOGY - AUSCRYPT '92. WORKSHOP ON THE THEORY AND APPLICATION OF CRYPTOGRAPHIC TECHNIQUES PROCEEDINGS, GOLD COAST, QLD., AUSTRALIA, 13-16 DEC. 1992, ISBN 3-540-57220-1, 1993, BERLIN, GERMANY, SPRINGER-VERLAG, GERMANY, pages 505-516, SAUERBREY J 'A modular exponentiation unit based on systolic arrays'**
- **ADVANCES IN CRYPTOLOGY - EUROCRYPT '90. WORKSHOP ON THE THEORY AND APPLICATION OF CRYPTOGRAPHIC TECHNIQUES PROCEEDINGS, AARHUS, DENMARK, 21-24 MAY 1990, ISBN 3-540-53587-X, 1991, BERLIN, GERMANY, SPRINGER-VERLAG, GERMANY, pages 230-244, DUSSE S R ET AL 'A cryptographic library for the Motorola DSP56000'**

## Description

L'invention concerne un procédé de production d'un paramètre de correction d'erreur associé à la mise en oeuvre d'opérations modulaires selon la méthode de Montgomery. Cette méthode permet d'effectuer des calculs modulaires dans un corps fini $GF(2^n)$ (corps de Gallois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des opérations modulaires, en utilisant la méthode de Montgomery. Il fait l'objet d'une demande de brevet européen, publiée sous la référence EP-A2-0 601 907, et est illustré figure 1 (cette figure correspondant à la figure 2 de la demande de brevet européen citée).

L'opération de base, dite $P_{field}$, consiste, à partir de trois données binaires A (multiplicande), B (multiplieur) et N (modulo), codées sur un nombre entier n de bits, à produire une donnée binaire notée $P(A, B)_N$ codée sur n bits, telle que $P(A, B)_N = A * B * I \bmod N$, avec I donnée binaire codée sur n bits tels que $I = 2^{-n} \bmod N$. Pour cela, on considère que les données sont codées sur m mots de k bits, avec $m * k = n$, et on fournit les mots des données A et B à un circuit de multiplication ayant une entrée série, une entrée parallèle et une sortie série.

Dans le coprocesseur décrit dans la demande de brevet européen citée, on a $k = 32$ et $m = 8$ ou 16.

Ce circuit est notamment utilisé pour produire le résultat de la multiplication modulaire $A * B \bmod N$.

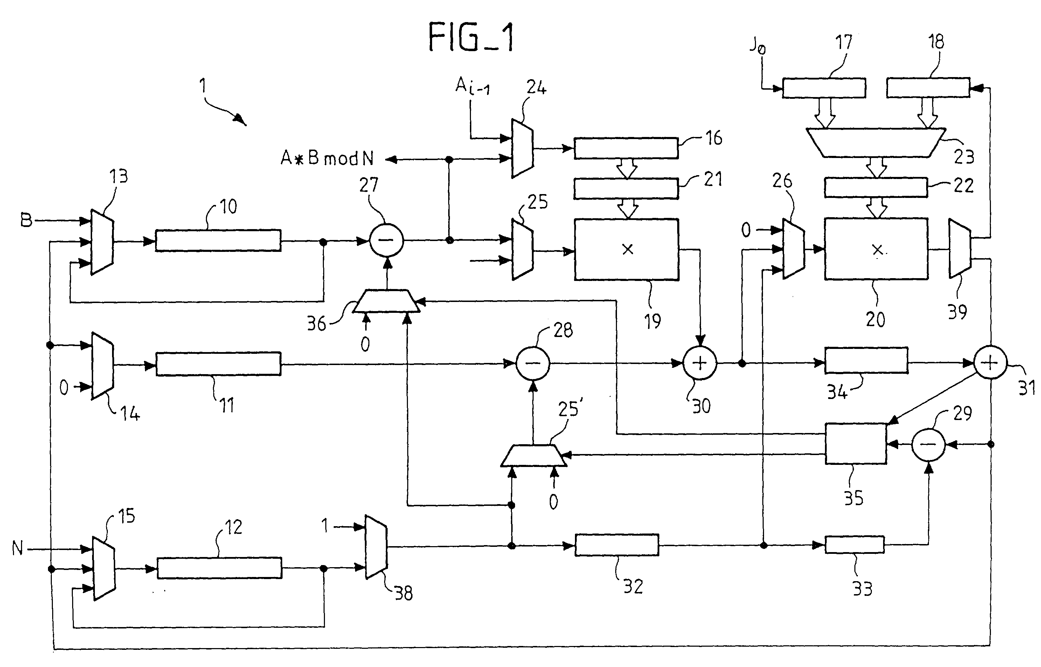

Dans cette optique, on met en oeuvre à l'aide du circuit illustré figure 1 un procédé comportant les étapes suivantes :

1. calcul d'un paramètre H ($H = 2^{2*n} \bmod N$) et d'un paramètre $J_0$ codé sur k bits, avec $J_0 = -N_0^{-1} \bmod 2^k$, $N_0$ étant le mot de poids le plus faible du modulo N, et stockage de $J_0$ dans un registre 17 de k bits,

2. chargement du multiplieur B et du modulo N dans des registres respectifs 10 et 12 de n bits, avec $n = m * k$, et initialisation d'un registre 11 de n bits à zéro, le contenu de ce registre étant noté S, avec S donnée variable binaire codée sur n bits,

3. mise en oeuvre d'une boucle, indicée par i, avec i variant de 1 à m, chaque $i^{ème}$ itération comprenant les opérations suivantes :

   a) transfert du $i^{ème}$ mot $A_{i-1}$ du multiplicande A d'un registre 16 vers une bascule de mémorisation 21,
   b) production d'une valeur $X(i) = S(i-1) + B * A_{i-1}$ avec $S(0) = 0$ et $S(i-1)$ la valeur dite actualisée de S, définie ci-après, en :

      I - décalant à droite le contenu du registre 10 vers l'entrée d'un premier circuit de multiplication 19 série-parallèle, avec rebouclage de la sortie du registre 10 sur son entrée,
      II - multipliant les bits de B par $A_{i-1}$,
      III - décalant à droite le contenu du registre 12, avec rebouclage de la sortie sur l'entrée,
      IV - déterminant la valeur actualisée de $S(i-1)$ comme étant la valeur stockée dans le registre 11 après la $(i-1)^{ème}$ itération, si celle ci est inférieure à N, et si elle est plus grande, en soustrayant en série N de celle-ci dans un premier circuit de soustraction série 28, la valeur en résultant étant la valeur actualisée de $S(i-1)$, et
      V - décalant à droite le contenu du registre 11 et additionnant bit à bit la valeur de la multiplication $B * A_{i-1}$ avec la valeur actualisée de $S(i-1)$ dans un premier circuit d'addition série 30;

   c) multiplication du mot le moins significatif de X(i), $X_0(i)$, par $J_0$, dans un deuxième circuit de multiplication 20 série-parallèle, et entrée de la valeur $X_0(i) * J_0 \bmod 2^k = Y_0(i)$ dans un registre 18, et simultanément retarder N et X(i) de k cycles dans des circuits de retard 32 et 34;
   d) calcul d'une valeur $Z(i) = X(i) + Y_0(i) * N$ en :

      I - multipliant $Y_0(i)$ par N, retardé de k cycles, dans le deuxième circuit de multiplication 20, et
      II - additionnant X(i) à la valeur $Y_0(i) * N$ dans un second circuit d'addition série 31,

   e) ne pas prendre en compte le mot le moins significatif de Z(i) et stocker les mots restants, c'est à dire $Z(i)/2^k$, dans le registre 11,
   f) comparer $Z(i)/2^k$ à N, bit à bit, dans le but de déterminer la valeur actualisée S(i) de l'itération suivante, de la manière décrite ci-dessus, cette comparaison se faisant en soustrayant bit à bit $Z(i)/2^k$ et N dans un deuxième circuit de soustraction série 29, N ayant été retardé de k cycles supplémentaires,

g) le $i^{ième}$ mot du multiplicande A étant chargé dans le registre 16 à un instant quelconque pendant les opérations ci-dessus;

4. à la $m^{ième}$ itération, ignorer le mot le moins significatif de Z(m) et entrer les mots restants, c'est à dire $Z(m)/2^k$, dans le registre 10,

5. répéter les étapes 3 et 4, dans lesquelles on substitue $Z(m)/2^k$ à B et H à A, et on fournit $Z(m)/2^k$ ou $(Z(m)/2^k)$ - N, par le biais d'un troisième circuit de soustraction série 27, au circuit de multiplication 19 (si $Z(m)/2^k) \geq N$),

6. sortie du résultat stocké dans le registre 10 à la dernière itération, éventuellement soustrait de N si nécessaire.

Globalement, en appelant temps de cycle, ou cycle, la période du signal d'horloge synchronisant le fonctionnement du circuit de la figure 1, le temps nécessaire au traitement d'une multiplication modulaire peut de décomposer principalement en :

- n * (n + 1) temps de cycle pour le calcul de H,
- n temps de cycle pour l'étape 2,
- m * (n + 2 * k + x) temps de cycle pour les étapes 3 et 4 réunies d'une part, et pour l'étape 5 d'autre part, avec x un entier,
- n temps de cycle pour l'étape 6.

En pratique, x est fonction de l'initialisation du circuit, c'est à dire principalement de l'établissement de signaux de commande (de multiplexeurs par exemple) pour assurer un fonctionnement cohérent du circuit. En pratique on pourra considérer par exemple que x = 7.

En ce qui concerne la première étape, le calcul du paramètre $J_0$ est réalisé par l'unité centrale (méthode logicielle).

On peut montrer que H est fonction de la taille du registre 16, et du nombre de fois où ce registre est utilisé dans une boucle. On a $H = 2^{2*n}$ mod N. Ce paramètre est un paramètre de correction d'erreur. En effet, l'étape 4 produit un résultat de la forme A * B * I, avec $I = 2^{-n}$ mod N. On a $H * I^2 = 1$ mod N, ce qui permet de fournir un résultat exact, c'est à dire égal au résultat de la multiplication modulaire A * B mod N, lors de l'étape 6 du procédé de multiplication modulaire décrit ci-dessus.

Le calcul de H est réalisé à l'aide du coprocesseur, selon la méthode suivante, à lire concurremment à la figure 2, cette figure 2 correspondant à la figure 9 de la demande de brevet européen citée.

Pour calculer H, on opère de la manière suivante (voir également description pages 20, ligne 47 à page 25, ligne 52 de la demande de brevet européen citée) :

1. chargement de N dans le registre 12, et initialisation du registre 10 à B(0) = 0,
2. simultanément :

- décalage à droite et soustraction bit à bit de B(0) et N dans un soustracteur série 27, avec décalage à gauche d'une unité du résultat $R(0) = B(0) - N$ mod $2^n$, le décalage se faisant dans le soustracteur en sortant un premier bit à 0,
- chargement de B(1) = 2 * R(0) dans le registre 10,
- soustraction bit à bit de 2 * R(0) et N pour déterminer si 2 * R(0) est $\geq$ ou < à N, cette soustraction se faisant dans un deuxième soustracteur 40, avec test dans un circuit 44 du résultat de la soustraction,

3. mise en oeuvre d'une boucle indicée par un indice i, avec i de 1 à n, chaque itération comprenant les opérations suivantes :

- si B(i) < N alors chargement de B(i+1) = 2 * (B(i) - 0) dans le registre 10,
- sinon chargement de B(i+1) = 2 * (B(i) - N) dans le registre 10.

On a $B(n+1) = H = 2^{2*n}$ mod N

L'inventeur a cherché à améliorer la mise en oeuvre d'opérations modulaires par le coprocesseur illustré figure 1, afin de diminuer les temps nécessaires au déroulement de celles-ci. Plus particulièrement, il a cherché à améliorer le procédé de calcul du paramètre de correction d'erreur H.

Ainsi, l'invention propose un Procédé de production d'un paramètre binaire de correction d'erreur $H = 2^{2*m*k}$ mod N associés à la mise en oeuvre d'opérations modulaires selon la méthode de Montgomery, avec N une donnée binaire, dite modulo, codée sur m mots de k bits chacun, comprenant les étapes suivantes:

1. chargement du modulo N dans un premier registre de n bits, avec n = m * k, et initialisation d'un deuxième registre de n bits à zéro, le contenu du deuxième registre étant noté B(0),

2. production et stockage d'une donnée B(1) = 2 * (B(0) - N) codée sur n bits par :

- décalage à droite dans les deux registres et soustraction bit à bit des contenus des premier et deuxième registres, avec décalage à gauche de une unité du résultat, noté R(0), de la soustraction bit à bit,
- chargement du résultat de la soustraction après décalage, noté B(1), dans le deuxième registre,
- comparaison de B(1) et de N, et caractérisé en ce que qu'il comprend les étapes de

3. production d'une donnée $H_{int} = 2^{n+v}$ mod N codée sur n bits, avec v un entier tel que v = (m * k)/$2^p$, avec p un entier, par :

    - mise en oeuvre d'une boucle indicée par un indice i, i entier de 1 à v, chaque $i^{ème}$ itération comprenant les opérations suivantes :

- si B(i) < N alors chargement dans le deuxième registre de B(i+1) = 2 * B(i) après décalage à gauche de B(i) de une unité, et comparaison bit à bit de B(i) et de N,
- sinon soustraction bit à bit de N et B(i), avec décalage à gauche de une unité du résultat et chargement dans le deuxième registre de B(i+1) = 2 * (B(i) - N), et comparaison bit à bit de B(i+1) et de N,

4. production du paramètre H par la mise en oeuvre de p opérations $H_{int}(j) = P(H_{int}(j-1), H_{int}(j-1))_N$, avec j indice de 1 à p, et $H_{int}(0) = B(v+1)$ ou B(v+1) - N.

L'invention propose donc de calculer H en mettant en oeuvre d'une part des soustractions, en nombre moins important que dans le procédé connu, et d'autre part des opérations $P_{field}$.

Dans le procédé antérieur, le temps nécessaire au calcul de H était de n * (n + 1) temps de cycle.

Dans le procédé selon l'invention, la durée du calcul est de n * (v + 1) + p * m * (n + 2 * k + x) temps de cycle.

Pour m = 16, l'ancien procédé nécessitait 262 656 temps de cycle.

Avec par exemple v = 2 * m = 32, c'est à dire p = 4, et en considérant x = 7, le procédé selon l'invention ne nécessite plus que 54 208 temps de cycle, soit un gain de temps de l'ordre de 80 %.

Le temps nécessaire à la production du paramètre H est bien sûr fonction de v. Le choix de v = 2 * m, c'est à dire p $\log_2(k)$ - 1, correspond à l'optimisation du procédé, c'est à dire à la minimisation de la durée nécessaire à la production de H, par rapport au circuit existant.

Par ailleurs, la production de H telle que définie dans le procédé connu et selon le nouveau procédé ci-dessus suppose que le bit de poids le plus fort du modulo est égal à 1, ce qui limite évidemment le choix de ce modulo. L'inventeur propose donc d'étendre le calcul de H au cas où le modulo N serait codé sur un nombre 1 de bits utiles inférieur à n, autrement dit au cas où on choisirait un modulo N ayant n - 1 bits de poids les plus forts à 0.

Ainsi, l'invention propose également un procédé de production d'un paramètre binaire de correction d'erreur H = $2^{2*m*k}$ mod N associés à la mise en oeuvre d'opérations modulaires selon la méthode de Montgomery, avec N une donnée binaire, dite modulo, codée sur m mots de k bits chacun, N ayant n - 1 bits de poids les plus forts à zéro, avec n = m * k, et 1 < n, caractérisé en ce que qu'il comprend les étapes suivantes:

1. chargement du modulo N dans un premier registre de n bits, avec n = m * k, et initialisation d'un deuxième registre de n bits à zéro, le contenu du deuxième registre étant noté B(0),

2. décalage à droite, avec rebouclage sur son entrée, de 1 bits du premier registre,

3. production et stockage d'une donnée B(1) = 2 * (B(0) - N'), codée sur n bits, avec N' = N * $2^{n-l}$, par :

- décalage à droite dans les deux registres et soustraction bit à bit des contenus des premier et deuxième registres, avec décalage à gauche de une unité du résultat, noté R(0), de la soustraction bit à bit,
- chargement du résultat de la soustraction après décalage, noté B(1), dans le deuxième registre,
- comparaison de B(1) et de N',

4. production d'une donnée $H_{int} = 2^{n+n-l+v}$ mod N' codée sur n bits, avec v un entier tel que v = (m * k)/$2^p$, avec p un entier, par :

    - mise en oeuvre d'une boucle indicée par un indice i, i entier de 1 à n - 1 + v, chaque $i^{ème}$ itération comprenant les opérations suivantes :

- si B(i) < N' alors chargement dans le deuxième registre de B(i+1) = 2 * B(i) après décalage à gauche de B(i) de une unité, et comparaison bit à bit de B(i+1) et de N',

**4**

- sinon soustraction bit à bit de N' et B(i), avec décalage à gauche de une unité du résultat et chargement dans le deuxième registre de B(i+1) = 2 * (B(i) - N'), et comparaison bit à bit de B(i+1) et de N',

5. si B(n-l+v+1) $\geq$ N' : soustraction bit à bit de B(n-l+v+1) et N', et chargement dans le deuxième registre de B(n-l+v+1) - N',

6. décalage à droite de n - 1 bits dans les premier et deuxième registres,

7. production du paramètre H par la mise en oeuvre de p opérations $H_{int}(j) = P(H_{int}(j-1), H_{int}(j-1))_N$, avec j indice de 1 à p, et $H_{int}(0) = B(n-l+v+1) * 2^{l-n}$ ou $(B(n-l+v+1) - N') * 2^{l-n}$.

De même que dans le procédé décrit auparavant, on prendra avantageusement v = 2 * m, c'est à dire p = $\log_2(k)$ - 1.

L'invention sera mieux comprise, et d'autres particularités et avantages apparaîtront dans la description ci-après de modes de réalisation de l'invention, donnés à titre indicatif et nullement limitatif, lue conjointement aux dessins annexés, dans lesquels :

- la figure 1 représente schématiquement un circuit permettant de mettre en oeuvre des opérations modulaires selon la méthode de Montgomery,
- la figure 2 représente un circuit mis en oeuvre dans le calcul d'un paramètre de correction d'erreur selon l'invention.

La figure 1 représente un circuit 1 de traitement d'opérations modulaires.

Il comprend :

- trois registres à décalage 10, 11 et 12 à entrée et sortie série. Ces registres comportent chacun un même nombre n de cellules, avec n = m * k. Ces registres pourront être subdivisables, par exemple en registres de n/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun k cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.
- des multiplexeurs 24, 25, 25', 26, 36 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit 35 de stockage de résultat de comparaison.

Pour plus de détails, on pourra se reporter à la demande de brevet européen citée (EP - 0 601 907 A2), et en particulier à la figure 3 de cette demande, et aux extraits de la description s'y rapportant : page 15, ligne 54 à page 16, ligne 13, et page 17, ligne 50 à page 18, ligne 55.

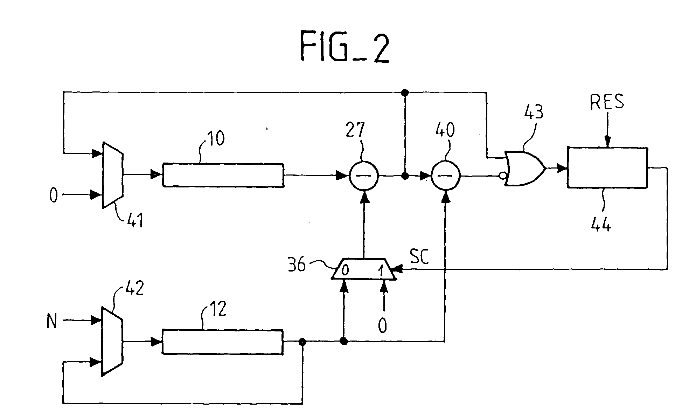

La figure 2 représente un circuit comprenant :

- les deux registres à décalage 10 et 12, le circuit de soustraction 27, le multiplexeur 36,
- deux multiplexeurs à deux entrées 41 et 42, dont les sorties respectives sont reliées respectivement aux entrées des registres 10 et 12,
- un circuit de soustraction série 40,
- une porte NON ET 43 à deux entrées,
- un circuit 44 de stockage de résultat de comparaison.

Les circuits de soustraction 27 et 40 ont deux entrées série et une sortie série.

Le circuit de soustraction 27 a une première entrée reliée à la sortie du registre 10, et sa sortie est reliée à une première entrée du circuit de soustraction 40. Le circuit de soustraction 40 a sa deuxième entrée reliée à la sortie du registre 12, et sa sortie reliée à une entrée inverseuse de la porte 43.

L'autre entrée (non inverseuse) de la porte 43 est reliée à la sortie du circuit de soustraction 27. Sa sortie est reliée à une entrée du circuit 44. Ce circuit 44 a une autre entrée pour recevoir un signal de réinitialisation RES.

Le multiplexeur 36 a deux entrées et une sortie. Sa sortie est reliée à la deuxième entrée du circuit de soustraction 28. Ses entrées sont reliées respectivement à la sortie du registre 12 et à une masse (potentiel correspondant à un 0 logique). Le multiplexeur 36 relie sélectivement sa sortie à sa première ou sa deuxième entrée suivant l'état d'un signal de sélection SC reçu du circuit 44 (par exemple, à la première entrée si SC = 0, et à la deuxième entrée si SC = 1).

Le multiplexeur 41 a ses entrées reliées respectivement à la sortie du circuit de soustraction 27 et à la masse.

Le multiplexeur 42 a ses entrées reliées respectivement à la sortie du registre 12 et à une borne d'entrée pour recevoir en série une donnée binaire (en pratique, le modulo N).

Le circuit de la figure 2 est utilisé pour produire un paramètre de correction d'erreur H qui est une donnée binaire codée sur n bits.

On a $H = 2^{2*n} \bmod N$.

On considère que le modulo N est codé sur l bits utiles, avec $l \leq n$, c'est à dire que le modulo N a ses n - 1 bits de poids les plus forts à l'état 0.

Le calcul de H nécessite les étapes suivantes :

**Si l =n:**

1 - chargement de N dans le registre 12 et parallèlement chargement de B(0) = 0 (n bits à 0) dans le registre 10, et initialisation du circuit 44 (c'est à dire production d'un signal RES tel que SC = 0),

2 - sortie de N et B(0) par décalage à droite dans les deux registres 10 et 12 du contenu de ces registres, l'entrée du registre 10 étant reliée à la sortie du circuit de soustraction 27, et l'entrée du registre 12 étant reliée à sa sortie,

- soustraction bit à bit, dans le circuit de soustraction 27, au fur et à mesure de leur sortie, des bits de N et B (0), avec décalage à gauche de une unité du résultat noté R(0) = B(0) - N,
- chargement de B(1) = 2 * R(0) dans le registre 10,
- soustraction bit à bit, dans le circuit de soustraction 40, de B(1) et N, pour déterminer si B(1) est $\geq$ ou $<$ à N, et production par le circuit 44 de SC = 0 si B(1) $\geq$ N et de SC = 1 dans le cas contraire,

3. mise en oeuvre d'une boucle indicée par un indice i, i entier de 1 à v, avec v un entier tel que $v = (m * k)/2^p$, avec p un entier, chaque $i^{ème}$ itération comprenant la reprise des opérations de l'étape 2 et se traduisant par :

- si B(i) < N (SC = 1) alors chargement dans le registre 10 de B(i+1) = 2 * B(i) = 2 * (B(i) - 0),
- sinon (SC = 0), chargement dans le deuxième registre de B(i+1) = 2 * (B(i) - N).

On a en fin de compte B(v+1) dans le registre 10, et N dans le registre 11.

4. p opérations $P_{field}$, à l'aide du circuit de la figure 1, avec

$$H_{int}(0) = B(v+1), \text{ ou } B(v+1) - N \text{ si } B(v+1) \geq N,$$

Pour j de 1 à p :

$$\text{production de } H_{int}(j) = P(H_{int}(j-1), H_{int}(j-1))_N.$$

On a $H = H_{int}(p)$

Pour la mise en oeuvre des opérations $P_{field}$ par le circuit de la figure 1, on se reportera à la demande de brevet européen citée, page 19, ligne 5 à page 20, ligne 45.

La méthode mise en oeuvre est la suivante :

1. calcul d'un paramètre $J_0$ codé sur k bits, avec $J_0 = -N_0^{-1} \bmod 2^k$, $N_0$ étant le mot de poids le plus faible du modulo N, et stockage de $J_0$ dans le registre 17 de k bits,

2. initialisation du registre 11 à zéro, le contenu de ce registre étant noté S, avec S donnée variable binaire codée sur n bits,

3. mise en oeuvre d'une boucle, indicée par i, avec i variant de 1 à m, chaque $i^{ème}$ itération comprenant les opérations suivantes :

a) si i = 1 alors décalage à droite dans le registre 10 avec rebouclage de son entrée sur sa sortie, et transfert du premier mot de B(v+1) ou B(v+1) - N (par le biais du circuit de soustraction 27) dans le registre 16 et la bascule 21, et si i > 1, alors transfert du $i^{ieme}$ mot $B_{i-1}$ de B(v+1) ou B(v+1) - N du registre 16 vers la bascule 21,

b) production d'une valeur X(i) = S(i-1) + B * $B_{i-1}$ avec S(0) = 0 et S(i-1) la valeur dite actualisée de S, définie ci-après, en :

    I - décalant à droite le contenu du registre 10 vers l'entrée du circuit de multiplication 19 série-parallèle, avec rebouclage de la sortie du registre 10 sur son entrée,

    II - multipliant les bits de B par $B_{i-1}$,

    III - décalant à droite le contenu du registre 12, avec rebouclage de la sortie sur l'entrée,

    IV - déterminant la valeur actualisée de S(i-1) comme étant la valeur stockée dans le registre 11 après la $(i-1)^{ieme}$ itération, si celle ci est inférieure à N, et si elle est plus grande, en soustrayant en série N de celle-ci dans le circuit de soustraction série 28, la valeur en résultant étant la valeur actualisée de S(i-1), et

    V - décalant à droite le contenu du registre 11 et additionnant bit à bit la valeur de la multiplication B * Bi-1 avec la valeur actualisée de S(i-1) dans le circuit d'addition 30;

c) multiplication du mot le moins significatif de X(i), $X_0(i)$, par $J_0$, dans le circuit de multiplication 20 série-parallèle, et entrée de la valeur $X_0(i) * J_0 \bmod 2^k = Y_0(i)$ dans le registre 18, et simultanément retarder N et X(i) de k cycles dans le circuit de retard 32;

d) calcul d'une valeur Z(i) = X(i) + $Y_0(i)$ * N en :

    I - multipliant $Y_0(i)$ par N, retardé de k cycles, dans le circuit de multiplication 20, et

    II - additionnant X(i) à la valeur $Y_0(i)$ * N dans le circuit d'addition 31,

e) ne pas prendre en compte le mot le moins significatif de Z(i) et stocker les mots restants, c'est à dire $Z(i)/2^k$, dans le registre 11,

f) comparer $Z(i)/2^k$ à N, bit à bit, dans le but de déterminer ultérieurement la valeur actualisée de S(i) de la manière décrite ci-dessus, cette comparaison se faisant en soustrayant bit à bit $Z(i)/2^k$ et N, retardé de k cycles supplémentaires dans le circuit 33, dans le circuit de soustraction 29,

g) le $(1+1)^{ieme}$ mot de B(v+1) ou B(v+1) - N étant chargé dans le registre 16 au moment de sa sortie du registre 10, pendant les opérations ci-dessus;

4. à la $m^{ième}$ itération, ignorer le mot le moins significatif de Z(m) et entrer les mots restants, c'est à dire $Z(m)/2^k$, dans le registre 10,

5. reprise (p - 1) fois des étapes 3 et 4,

6. sortie du résultat stocké dans le registre 10 à la dernière itération, éventuellement soustrait de N si nécessaire (par le biais du circuit de soustraction 27).

**Si l < n :**

On procèdera selon les étapes suivantes :

1 - chargement de N dans le registre 12 et parallèlement chargement de B(0) = 0 (n bits à 0) dans le registre 10, et initialisation du circuit 44 (RES tel que SC = 0),

2 - décalage à droite de 1 bits des contenus des registres 10 et 12, avec rebouclage des entrées des registres sur leurs sorties,

3 - sortie de N' = N * $2^{n-l}$ et B(0) par décalage à droite dans les deux registres 10 et 12 du contenu de ces registres, l'entrée du registre 10 étant reliée à la sortie du circuit de soustraction 27, et l'entrée du registre 12 étant reliée à sa sortie,

-    soustraction bit à bit, dans le circuit de soustraction 27, au fur et à mesure de leur sortie, des bits de N' et B(0), avec décalage à gauche d'une unité du résultat noté R(0) = B(0) - N',

-    chargement de B(1) = 2 * R(0) dans le registre 10,

-    soustraction bit à bit, dans le circuit de soustraction 40, de B(1) et N', pour déterminer si B(1) est $\geq$ ou < à N', et production par le circuit 44 de SC = 0 si B(1) $\geq$ N' et de SC = 1 dans le cas contraire,

4. mise en oeuvre d'une boucle indicée par un indice i, i entier de 1 à n - 1 + v, avec v un entier tel que v = $mk/2^p$, avec p un entier, chaque $i^{ieme}$ itération comprenant la reprise des opérations de l'étape 2 et se traduisant par :

-    si B(i) < N' (SC = 1) alors chargement dans le registre 10 de B(i+1) = 2 * B(i) = 2 * (B(i) - 0),

-    sinon (SC = 0), chargement dans le deuxième registre de B(i+1) = 2 * (B(i) - N').

5. si $B(n-l+v+1) \geq N'$, soustraction bit à bit de $B(n-l+v+1)$ et de $N'$ dans le circuit de soustraction 27, ce qui donne $2 * (B(n+v-l+1) - N')$, cette donnée étant stockée dans le registre 10 avec un décalage à droite pour obtenir $2^{n+(n-l)+v}$ mod N'dans le registre 10.

6. décalage à droite de n - 1 bits dans les registres 10 et 12.

On a ainsi N dans le registre 12, et $2^{n+v}$ mod N dans le registre 10.

7. p opérations $P_{field}$, à l'aide du circuit de la figure 1, avec

$$H_{int}(0) = B(n-l+v+1) * 2^{l-n} \text{ ou } (B(n-l+v+1) - N') * 2^{l-n} \text{ si } B(n-l+v+1) \geq N',$$

Pour j de 1 à p :

$$\text{production de } H_{int}(j) = P(H_{int}(j-1), H_{int}(j-1))_N.$$

On notera dans le procédé ci-dessus deux différences par rapport à celui mis en oeuvre dans le cas $l = n$ :

- deux étapes de décalage supplémentaires (étapes 2 et 6),
- un nombre variable d'itérations lors de l'étape de production de $H_{int}$.

En ce qui concerne l'étape 2, on pourra se contenter d'un décalage uniquement dans le registre 12, tous les bits stockés dans le registre 10 étant égaux.

Par rapport au cas où $1 = n$, la durée du calcul sera variable suivant la valeur de 1. En effet, le temps nécessaire à la production de H sera maintenant de $n * (n - 1 + v + 1)$ temps de cycle pour les soustractions (dépendant de 1), $p * m * (n + 2 * k + x)$ temps de cycle pour les mises au carrés (inchangé) et n temps de cycle pour les décalages.

Le temps global de calcul de H sera donc donné par la formule : $n * (n - 1 + v + 2) + p * m * (n + 2 * k + x)$.

Pour $n = 512$, $x = 7$, $v = 32$ on aura une durée de :

- 185 280 temps de cycle si $1 = 257$,
- 112 064 temps de cycle si $1 = 400$,
- 55 232 temps de cycle si $1 = 511$.

On a supposé dans la figure 2 que l'on utilisait des ressources du circuit de la figure 2. Cela permet de minimiser la taille globale du coprocesseur. Bien entendu, on pourra utiliser un circuit dédié à la seule production de H.

L'invention est particulièrement avantageuse dans la mesure où on pourra la mettre en oeuvre sans modifier les circuits existants, illustrés figure 1 et 2. On modifie uniquement le circuit de séquencement permettant de produire les différents signaux de commande nécessaires au fonctionnement de ces circuits. En particulier, on pourra être amené à prendre en compte la taille utile du modulo N.

Comme on l'a vu, l'invention permet un gain de temps par rapport à la technique antérieure. Pour $n = 512$ ou $256$, et $k = 32$, l'inventeur a montré que $p = \log_2(k) - 1 = 4$ représentait le meilleur compromis en ce qui concerne la durée du calcul de H. On aura alors $v = 2 * m = 32$ ou $16$ suivant la valeur de n.

## Revendications

**1.** Procédé de production d'un paramètre binaire de correction d'erreur $H = 2^{2*m*k}$ mod N associé à la mise en oeuvre d'opérations modulaires selon la méthode de Montgomery, avec N une donnée binaire, dite modulo, codée sur m mots de k bits chacun, comprenant les étapes suivantes :

1. chargement du modulo N dans un premier registre (12) de n bits, avec $n = m * k$, et initialisation d'un deuxième registre (10) de n bits à zéro, le contenu du deuxième registre étant noté B(0),

2. production et stockage d'une donnée $B(1) = 2 * (B(0) - N)$ codée sur n bits par :

- décalage à droite dans les deux registres et soustraction bit à bit des contenus des premier et deuxième registres, avec décalage à gauche d'une unité du résultat, noté R(0), de la soustraction bit à bit,
- chargement du résultat de la soustraction après décalage, noté B(1), dans le deuxième registre,
- comparaison de B(1) et de N, et caractérisé en ce que qu'il comprend les étapes de

3. production d'une donnée $H_{int} = 2^{n+v}$ mod N codée sur n bits, avec v un entier tel que v = (m * k)/$2^p$, avec p un entier, par :

mise en oeuvre d'une boucle indicée par un indice i, i entier de 1 à v, chaque $i^{ième}$ itération comprenant les opérations suivantes :

- si B(i) < N alors chargement dans le deuxième registre de B(i+1) = 2 * B(i) après décalage à gauche de B(i) de une unité, et comparaison bit à bit de B(i+1) et de N,
- sinon soustraction bit à bit de N et B(i), avec décalage à gauche de une unité du résultat et chargement dans le deuxième registre de B(i+1) = 2 * (B(i) - N), et comparaison bit à bit de B(i) et de N,

4. production du paramètre H par la mise en oeuvre de p opérations $P_{field}$ : $H_{int}$ (j) = P($H_{int}$ (j-1), $H_{int}$ (j-1))$_N$ avec j indice de 1 à p, et $H_{int}(0)$ = B(v+1) ou B(v+1)-N.

**2.** Procédé de production d'un paramètre binaire de correction d'erreur H = $2^{2*m*k}$ mod N associé à la mise en oeuvre d'opérations modulaires selon la méthode de Montgomery, avec N une donnée binaire, dite modulo, codée sur m mots de k bits chacun, N ayant n - 1 bits de poids les plus forts à zéro, avec n = m * k, et 1 < n, caractérisé en ce que qu'il comprend les étapes suivantes :

1. chargement du modulo N dans un premier registre (12) de n bits, avec n = m * k, et initialisation d'un deuxième registre (10) de n bits à zéro, le contenu du deuxième registre étant noté B(0),
2. décalage à droite, avec rebouclage sur son entrée, de 1 bits du premier registre,
3. production et stockage d'une donnée B(1) = 2 * (B(0) - N'), codée sur n bits, avec N' = N * $2^{n-l}$, par :

- décalage à droite dans les deux registres et soustraction bit à bit des contenus des premier et deuxième registres, avec décalage à gauche de une unité du résultat, noté R(0), de la soustraction bit à bit,
- chargement du résultat de la soustraction après décalage, noté B(1), dans le deuxième registre,
- comparaison de B(1) et de N',

4. production d'une donnée $H_{int} = 2^{n+n-l+v}$ mod N' codée sur n bits, avec v un entier tel que v = (m * k)/$2^p$, avec p un entier, par :

- mise en oeuvre d'une boucle indicée par un indice i, i entier de 1 à n - 1 + v, chaque $i^{ième}$ itération comprenant les opérations suivantes :

- si B(i) < N' alors chargement dans le deuxième registre de B(i+1) = 2 * B(i) après décalage à gauche de B(i) de une unité, et comparaison bit à bit de B(i+1) et N',
- sinon soustraction bit à bit de N' et B(i), avec décalage à gauche de une unité du résultat et chargement dans le deuxième registre de B(i+1) = 2 * (B(i) et comparaison bit à bit de B(i+l) et de N',

5. si B(n-l+v+1) ≥ N' : soustraction bit à bit de B(n-l+v+1) et N', et chargement dans le deuxième registre de B(n-1+v+1) - N',
6. décalage à droite de n - 1 bits dans les premier et deuxième registres,
7. production du paramètre H par la mise en oeuvre de p opérations $P_{field}$ : $H_{int}$(j) = P($H_{int}$(j-1), $Hj_{nt}$(j-1))$_N$ avec j indice de 1 à p, et $H_{int}(0)$ = B(n-l+v+1) * $2^{l-n}$ ou (B(n-l+v+1) - N') * $2^{l-n}$.

**3.** Procédé selon l'une des revendications 1 ou 2, caractérisé en ce que p = $\log_2(k)$ -1.

**Patentansprüche**

**1.** Verfahren zum Erzeugen eines binären Parameters zur Fehlerkorrektur H = $2^{2 \cdot m \cdot k}$ mod N in Verbindung mit dem Umsetzen von modularen Operationen nach dem Verfahren von Montgomery, wobei N ein gegebener binärer Wert ist, genannt Modulo, der in m Worte von jeweils k Bit codiert ist, das die folgenden Schritte umfaßt:

1. Laden von Modulo N in ein erstes Register (12) von n Bit mit n = m · k, und Initialisieren eines zweiten Registers (10) von n Bit auf Null, wobei der Inhalt des zweiten Registers mit B(0) bezeichnet wird,
2. Erzeugen und Speichern eines Wertes B(1) = 2 · (B(0) - N), der in n Bit codiert wird durch:

- Verschieben nach rechts in den zwei Registern und Subtraktion Bit für Bit der Inhalte des ersten und des zweiten Registers mit Verschieben nach links um eine Einheit des Resultats, das mit R(0) bezeichnet wird, der Subtraktion Bit für Bit,

- Laden des Ergebnisses der Subtraktion nach dem Verschieben, das mit B(1) bezeichnet wird, in das zweite Register,

- Vergleichen von B(1) und von N und dadurch gekennzeichnet, daß es die Schritte umfaßt:

3. Erzeugen eines Wertes $H_{int} = 2^{n+v} \mod N$, der in n Bit codiert ist, mit einer ganzen Zahl v wie v = (m · k)/$2^p$ mit einer ganzen Zahl p, durch:

Umsetzen einer mit i indizierten Schleife, wobei i eine ganze Zahl zwischen 1 und v ist, wobei jede i-te Iteration die folgenden Operationen umfaßt:

- Laden von B(i+1) = 2 · B(i) in das zweite Register nach Verschieben nach links von B(i) um eine Einheit, wenn B(i) < N gilt und Vergleichen Bit für Bit von B(i+1) und N,

- andernfalls Subtraktion Bit für Bit von N und B(i) mit Verschieben nach links um eine Einheit des Ergebnisses und Laden von B(i+1) = 2 · (B(i) - N) in das zweite Register und Vergleichen Bit für Bit von B(i) und N,

4. Erzeugen des Parameters H durch das Umsetzen von p Operationen $P_{field}$ : $H_{int}(j) = P(H_{int}(j-1), H_{int}(j-1))_N$ mit j zwischen 1 und p und $H_{int}(0) = B(v+1)$ oder B(v+1) -N.

2. Verfahren zur Erzeugung eines binären Parameters zur Fehlerkorrektur $H = 2^{2 \cdot m \cdot k} \mod N$ in Verbindung mit dem Umsetzen von modularen Operationen nach dem Verfahren von Montgomery, wobei N ein gegebener binärer Wert ist, genannt Modulo, der in m Worte von jeweils k Bit codiert ist, wobei N n - l obere Bit auf Null hat, mit jeweils n = m · k und l < n, dadurch gekennzeichnet, daß es die folgenden Schritte umfaßt:

1. Laden von Modulo N in ein erstes Register (12) von n Bit mit n = m · k und Initialisieren eines zweiten Registers (10) von n Bit auf Null, wobei der Inhalt des zweiten Registers mit B(0) bezeichnet wird,
2. Verschieben nach rechts mit Rückschleifung an den Eingang von l Bit des ersten Registers,
3. Erzeugen und Speichern eines Wertes B(1) = 2 · (B(0) - N'), der in n Bit mit $N' = N \cdot 2^{n-l}$ codiert ist, durch:

- Verschieben nach rechts in den zwei Registern und Subtraktion Bit für Bit der Inhalte des ersten und zweiten Registers mit Verschieben nach links um eine Einheit des Resultats, das mit R(0) bezeichnet wird, der Subtraktion Bit für Bit,

- Laden des Ergebnisses der Subtraktion nach dem Verschieben, das mit B(1) bezeichnet wird, in das zweite Register,

- Vergleichen von B(1) und N',

4. Erzeugen eines Wertes $H_{int} = 2^{n+n-l+v} \mod N'$, der in n Bit codiert wird, mit einer ganzen Zahl v wie v = (m · k)/$2^p$ mit einer ganzen Zahl p, durch:

Umsetzen einer mit i indizierten Schleife, wobei i eine ganze Zahl zwischen 1 und n - l + v ist, wobei jede i-te Iteration die folgenden Operationen umfaßt:

- Laden von B(i+1) = 2 · B(i) in das zweite Register nach Verschieben nach links von B(i) um eine Einheit, wenn B(i) < N' gilt, und Vergleichen Bit für Bit von B(i+1) und N',

- andernfalls Subtraktion Bit für Bit von N' und B(i) mit Verschieben nach links um eine Einheit des Resultats und Laden von B(i+1) = 2 · (B(i) - N') in das zweite Register und Vergleichen Bit für Bit von B(i+1) und N',

5. wenn B(n-l+v+1) ≥ N': Subtraktion Bit für Bit von B(n-l+v+1) und N' und Laden von B(n-l+v+1) - N' in das zweite Register,
6. Verschieben nach rechts von n - 1 Bit in dem ersten und dem zweiten Register,
7. Erzeugen des Parameters H durch das Umsetzen von p Operationen $P_{field}$ : $H_{int}(j) = P(H_{int}(j-1), H_{int}(j-1))_N$ mit j zwischen 1 und p, und $H_{int}(0) = B(n-1+v+1) \cdot 2^{l-n}$ oder (B(n-l+v+1) - N') · $2^{l-n}$.

3. Verfahren nach einem der Ansprüche 1 oder 2, dadurch gekennzeichnet, daß p = $\log_2(k)$ - 1 gilt.

**Claims**

1. Method of producing a binary error-correction parameter $H = 2^{2^*m^*k} \mod N$ associated with the implementation of modular operations according to the Montgomery method, where N is a so-called modulo binary data item, coded over m words each of k bits, comprising the following steps:

(1) loading the modulo N into a first n-bit register (12), where n = m * k, and initialising a second n-bit register (10) at zero, the content of the second register being denoted B(0),

(2) producing and storing a data item B(1) = 2 * (B(0) - N) coded over n bits by:

- shifting to the right in the two registers and subtracting bit by bit the contents of the first and second registers, with shifting to the left by one unit of the result, denoted R(0), of the bit by bit subtraction,

- loading the result of the subtraction after shifting, denoted B(1), in the second register,

- comparing B(1) and N,

and characterised in that it comprises the steps of

(3) producing a data item $H_{int} = 2^{n+v}$ mod N coded over n bits, with v an integer such that v = (m * k)/$2^p$, with p an integer, by:
implementing a loop indexed by an index i, i integer from 1 to v, each $i^{th}$ iteration comprising the following operations:

- if B(i) < N, then loading B(i+1) = 2 * B(i) in the second register after shifting B(i) to the left by one unit, and comparing B(i+1) and N bit by bit,

- otherwise subtracting N and B(i) bit by bit, with shifting of the result to the left by one unit and loading B(i+1) = 2 * (B(i) - N) in the second register, and comparing B(i) and N bit by bit,

(4) producing the parameter H by implementing p operations $P_{field}$ : $H_{int}$(j) = P($H_{int}$(j-1), $H_{int}$(j- 1))N with j an index from 1 to p, and Hint(0) = B(v+1) or B(v+1) - N.

2. Method of producing a binary error-correction parameter H = $2^{2*m*k}$ mod N associated with the implementation of modular operations according to the Montgomery method, where N is a so-called modulo binary data item, coded over m words each of k bits, N having n - l most significant bits at zero, with n = m * k, and l < n, characterised in that it comprises the following steps:

(1) loading the modulo N into a first n-bit register (12), where n = m * k, and initialising a second n-bit register (10) at zero, the content of the second register being denoted B(0),

(2) shifting one bit of the first register to the right, with looping back on its input,

(3) producing and storing a data item B(1) = 2 * (B(0) - N') coded over n bits, with N' = N * $2^{n-l}$, by:

- shifting to the right in the two registers and subtracting bit by bit the contents of the first and second registers, with shifting to the left by one unit of the result, denoted R(0), of the bit by bit subtraction,

- loading the result of the subtraction after shifting, denoted B(1), in the second register,

- comparing B(1) and N',

(4) producing a data item Hint = $2^{n+n-l+v}$ mod N' coded over n bits, with v an integer such that v = (m * k)/$2^p$, with p an integer, by:
implementing a loop indexed by an index i, i integer from 1 to n - l + v, each $i^{th}$ iteration comprising the following operations:

- if B(i) < N, then loading B(i+1) = 2 * B(i) in the second register after shifting B(i) to the left by one unit, and comparing B(i+1) and N' bit by bit,

- otherwise subtracting N' and B(i) bit by bit, with shifting of the result to the left by one unit and loading B(i+1) = 2 * (B(i) - N') in the second register, and comparing B(i+1) and N' bit by bit,

(5) if B(n-l+v+1) $\geq$ N': subtracting B(nl+v+1) and N' bit by bit, and loading B(n-l+v+1) - N' into the second register,

(6) shifting n - l bits to the right in the first and second registers,

(7) producing the parameter H by implementing p operations $P_{field}$ : $H_{int}(j) = P(H_{int}(j-1), H_{int}(j - 1))_N$ with j an index from 1 to p, and $H_{int}(0) = B(n-l+v+1) * 2^{l-n}$ or $(B(n-l+v+1) - N') * 2^{l-n}$.

3. Method according to one of Claims 1 or 2, characterised in that p = $\log_2(k)$ - 1.

# FIG_1

EP 0 712 070 B1

# FIG_2